# EUROPÄISCHE PATENTSCHRIFT

(11) **EP 1 037 227 B1**
(45) Veröffentlichungstag und Bekanntmachung des Hinweises auf die Patenterteilung: **28.06.2006**
(21) Anmeldenummer: 00103939.5
(22) Anmeldetag: 25.02.2000
(51) Int. Cl.: H01H 13/70

(54) **Installationsschalter für die Gebäudeinstallation**
Installation switch for building installations
Interrupteur d'installation pour installations dans les bâtiments

(30) Priorität: 09.03.1999 DE 29904174 U
(43) Veröffentlichungstag der Anmeldung: 20.09.2000
(73) Patentinhaber: Merten GmbH & Co. KG, 51674 Wiehl (DE)
(72) Erfinder: Vicktorius, Richard, 50739 Köln (DE)
(74) Vertreter: Selting, Günther

(56) Entgegenhaltungen:
- EP-A- 0 782 091
- EP-A- 0 841 673
- WO-A-92/04724
- DE-A- 4 312 614
- DE-U- 9 012 155
- DE-U- 9 411 391
- US-A- 4 551 598
- US-A- 5 196 782

## Beschreibung

Die Erfindung betrifft einen Installationsschalter für die Gebäudeinstallation, und insbesondere einen Schalter zum Schalten der Netzspannung sowie auch einen Schalter zum Schalten einer Niederspannung.

Die üblicherweise in der Gebäudeinstallation benutzten Schalter sind mechanische Schalter, bei denen eine Schaltwippe verschiedene Kontakte verbindet. Darüber hinaus gibt es Taster, bei denen eine Sensorfläche lediglich angetippt wird, um einen Schaltvorgang auszulösen. Solche Taster haben ein Installationsgehäuse, das in eine Installationsdose hineinpaßt und die Elektronik enthält. Dem Installationsgehäuse ist eine Tastplatte vorgesetzt. Vom äußeren Erscheinungsbild her sehen derartige Taster ähnlich aus wie übliche mechanische Installationsschalter.

Aus WO 92/04724 ist ein Druckschaltelement bekannt, das zwischen zwei Glasplatten gebildet ist. Durch Druck auf die Glasplatten werden diese örtlich gegeneinandergedrückt, so daß an der Druckstelle ein elektrischer Kontakt geschlossen wird. Die Glasplatten bilden eine durchsichtige Scheibenstruktur. Die dazwischen enthaltenen elektrischen Leiterbahnen bestehen ebenfalls aus durchsichtigem Material, das mit bloßem Auge kaum zu erkennen ist.

Der Erfindung liegt die Aufgabe zugrunde, einen Installationsschalter für die Gebäudeinstallation zu schaffen, der gegenüber den bisherigen Installationsschaltern, wie im Dokument DE 4312614 gezeigt, eine größere Vielseitigkeit hinsichtlich der Schaltfunktionen und hinsichtlich der konstruktiven Gestaltungsmöglichkeiten sowie des äußeren Erscheinungsbildes zur Verfügung stellt.

Die Lösung dieser Aufgabe erfolgt erfindungsgemäß mit den im Anspruch 1 angegebenen Merkmalen.

Der erfindungsgemäße Installationsschalter weist als Tastplatte eine durchsichtige Scheibe auf, die mindestens ein durch Druck betätigbares Schaltorgan enthält. Diese Scheibe bildet ein optisch sehr wenig in Erscheinung tretendes Element, das nicht ohne weiteres als Schalter oder Betätigungsorgan erkennbar ist. Auf der Scheibe können unterschiedliche Tastfelder angeordnet sein, die unterschiedlichen Schaltfunktionen entsprechen. Die Tastorgane von Tastern müssen eine gewisse Größe und gegenseitige Abstände haben, damit sie mit den Fingern selektiv betätigt werden können. Dies führt dazu, daß Taster mit mehreren Schaltfunktionen ein relativ großes und massiv wirkendes Panel bilden. Bei dem erfindungsgemäßen Installationsschalter können beliebig viele Schaltflächen oder Tastfelder vorgesehen sein, ohne daß die Tastplatte insgesamt klobig oder großflächig wirkt. Dies liegt daran, daß die durchsichtige Scheibe als Schaltvorrichtung nicht in Erscheinung tritt und lediglich als Ornament empfunden wird.

Vorzugsweise ist die Tastplatte an dem Sockel derart angebracht, daß unter ihr ein offener Freiraum vorhanden ist. Ein offener Freiraum ist in diesem Zusammenhang ein Hohlraum, der zu den Seiten hin oder auch nach unten offen ist. Mindestens ein Bereich der Glasplatte, welcher Tastorgane aufweist, ist an seinem Rücken nicht abgestützt. Die Abstützung kann entweder an einem Ende der Scheibe erfolgen, so daß die Scheibe nach Art eines Auslegers frei absteht, oder an entgegengesetzten Rändern.

Bei dem erfindungsgemäßen Installationsschalter wirkt die Scheibe, die den Träger der Schaltorgane bildet, als leichtes und flaches Bauteil, bei dem eine elektrische Funktion für den Betrachter nicht erkennbar ist und das als optisches Zierelement wirkt. Gleichwohl trägt die Scheibe mindestens ein Schaltorgan, vorzugsweise mehrere Schaltorgane. Daher besteht die Möglichkeit, die funktionell wirksame Tastfläche weit über die Fläche der Installationsdose hinaus zu vergrößern, ohne daß eine massiv und großflächig wirkende Schalttafel entsteht. Selbstverständlich können die Schaltorgane auf der Scheibe durch Umrißfelder oder farbige Felder markiert sein, so daß der Benutzer weiß, welches Tastfeld er zum Auslösen einer bestimmten Funktion drücken muß.

Vorzugsweise ist die Tastplatte pultartig schräggestellt. Da Schalter in der Regel tiefer als Augenhöhe angeordnet sind, fällt bei dieser Ausführungsform der Blick des Benutzers nahezu senkrecht auf die Scheibe. Ferner wird das Drücken der Schaltorgange begünstigt.

Der Sockel, an dem die Tastplatte befestigt ist, ist zweckmäßigerweise mit Kontakten bzw. Halteelementen versehen, die mit elektrischen Kontakten des Installationsgehäuses und mechanischen Halterungen der Tragplatte zusammengreifen. Auf diese Weise kann der Sockel an das Installationsgehäuse bzw. an die Tragplatte angesteckt werden. In vielen Fällen wird eine einfache Steckverbindung ausreichen, um den Sockel mit der Scheibe sicher an dem Installationsgehäuse anzubringen. Es ist allerdings auch möglich, zur Sicherung eine zusätzliche Verschraubung vorzusehen.

Der Sockel enthält vorzugsweise eine elektronische Selektionsschaltung, die aus den Tastsignalen Übertragungssignale für eine im Installationsgehäuse enthaltene Schaltung erzeugt. Dies betrifft den Fall, daß die Tastplatte mehrere Schaltorgane aufweist. Das bei Betätigung eines Schaltorgans erzeugte Tastsignal ist ein Niederspannungssignal, das zunächst in der Selektionsschaltung verarbeitet und dann der im Installationsgehäuse enthaltenen Schaltung zugeführt wird. Auf diese Weise ist es möglich, den Sockel mit dem Installationsgehäuse über einen zweipoligen Stecker zu verbinden, der Signale von mehr als einem Schaltorgan übertragen kann, beispielsweise durch Codierung.

Der Installationsschalter kann als Netzschalter vorgesehen sein, um die Spannung des Versorgungsnetzes zu schalten. In diesem Fall enthält das Installationsgehäuse einen Leistungsschalter, der vorzugsweise als elektronischer Schalter ausgebildet ist. Dieser Schalter kann auch eine zusätzliche Dimmfunktion haben. Es ist aber auch möglich, den Installationsschalter als Niederspannungsschalter für die Hausleittechnik vorzusehen. In diesem Fall enthält das Installationsgehäuse einen Busankoppler mit Mikroprozessor, der über einen im Gebäude installierten Bus Telegramme mit anderen Busankopplern oder mit einer Zentrale austauscht. Diese Telegramme enthalten Informationen über den Schaltzustand der Schaltorgane des jeweiligen Installationsschalters.

Im folgenden werden unter Bezugnahme auf die Zeichnungen Ausführungsbeispiele der Erfindung näher erläutert.

Es zeigen:
- Fig. 1: eine Seitenansicht einer ersten Ausführungsform der aus Sockel und Tastplatte bestehenden Einheit,
- Fig. 2: einen vertikalen Schnitt durch eine Installationsdose mit darin angeordnetem Installationsgehäuse mit Tragplatte,
- Fig. 3: eine Frontansicht des Installationsgehäuses mit Tragplatte,
- Fig. 4: eine Frontansicht des Installationsgehäuses der Fign. 1-3,
- Fig. 5: eine Seitenansicht einer weiteren Ausführungsform einer Einheit aus Sockel und Tastplatte,
- Fig. 6: eine Frontansicht der in Fig. 5 dargestellten Einheit,
- Fig. 7: eine Seitenansicht einer dritten Ausführungsform des Installationsschalters und
- Fig. 8: eine Frontansicht des Installationsschalters von Fig. 7.

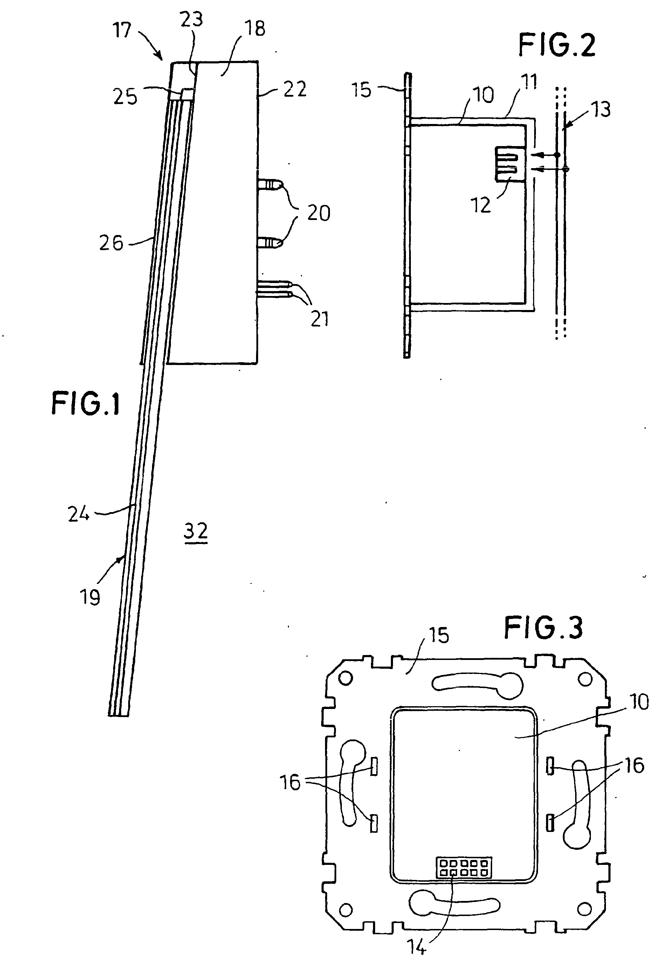

Sämtliche dargestellten Installationsschalter haben ein im wesentlichen zylindrisches Installationsgehäuse 10, das in eine übliche Installationsdose 11 für die Elektroinstallation eingesetzt wird. Das Installationsgehäuse 10 weist eine Anschlußvorrichtung 12 für die Adern einer Installationsleitung 13 auf, bei der es sich in Fig. 2 um eine Busleitung handelt, also um eine Niederspannungs-Informationsleitung. An seiner Vorderseite, die in Fig. 3 sichtbar ist, weist das Installationsgebäude 10 elektrische Kontakte 14 in Form von Steckbuchsen auf. Das Installationsgehäuse ist mit einer Tragplatte 15 versehen, welche einen seitlich abstehenden Rahmen bildet. Die Tragplatte 15 besteht aus Metall und weist verschiedene Durchbrechungen auf, zu denen auch solche gehören, welche Halterungen 16 für Halteelemente eines Sockels bilden. Schließlich finden sich an der Tragplatte (nicht dargestellte) Haltekrallen, die gespannt werden können, um die Tragplatte 15 mit dem Installationsgehäuse 10 an der Installationsdose 11 festzuspannen.

Das Installationsgehäuse 10 mit der Tragplatte 15 wird in der als Unterputzdose ausgebildeten Installationsdose 11 montiert, wobei die Tragplatte 15 bündig mit der Wand des Raumes liegt. Dann wird die in Fig. 1 dargestellte Funktionseinheit 17 aus Sockel 18 und Tastplatte 19 durch Steckverbindung mit dem Tragrahmen 15 bzw. dem Installationsgehäuse 10 verbunden. Zu diesem Zweck sind an der Rückseite des Sockels mechanische federnde Halteelemente 20 und elektrische Kontakte 21 vorgesehen. Die Halteelemente 20 greifen einrastend mit den Halterungen 16 der Tragplatte 15 zusammen, während die elektrischen Kontakte 21 in die Buchsen der Kontakte 14 des Installationsgehäuses 10 eingreifen.

Der Sockel 18 besteht aus einem in Frontansicht rechteckigen Gehäuse, dessen Abmessungen etwas größer sind als diejenigen der Tragplatte 15. Die Frontseite 23 des Sockels 18 ist pultförmig geneigt, d.h. sie steht unten weiter von der Rückseite 22 vor als oben. Auf der Frontseite 23 ist die Tastplatte 19 befestigt, wobei diese Tastplatte den Sockel 18 nach unten um mehr als die Hälfte der vertikalen Höhe des Sockels überragt. Die Tastplatte 19 ist generell in der Weise ausgebildet wie in WO 92/04724 beschrieben und besteht aus einer durchsichtigen Scheibe, in die Leiterbahnen 24 eingebettet sind, wodurch Schaltorgane gebildet sind, welche durch mechanischen Druck betätigt werden können. Die Leiterbahnen 24 sind an einem Rand aus der Tastplatte 19 als Anschlußfahnen 25 herausgeführt und mit (nicht dargestellten) Anschlüssen des Sockels 22 verbunden.

Der über dem Sockel 18 befindliche Teil der Tastplatte 19 ist mit einer Dekorplatte 26 bedeckt. Diese kann ausgewechselt werden, um unterschiedlichen Geschmacksrichtungen Rechnung zu tragen.

Der über den Sockel 18 hinausragende Teil 19a der Tastplatte weist mehrere Tastorgane 27 auf, von denen jedes ein Tastfeld bildet, auf das gedrückt werden kann, um einen Schaltvorgang auszuführen. Die Felder können durch dünne Linien umrissen oder auf andere Weise markiert sein, um die Grenzen des Tastorgans 27 anzugeben. Zu jedem Tastorgan 27 führen Leiterbahnen 24, die beim Drücken des Tastorgans untereinander verbunden werden.

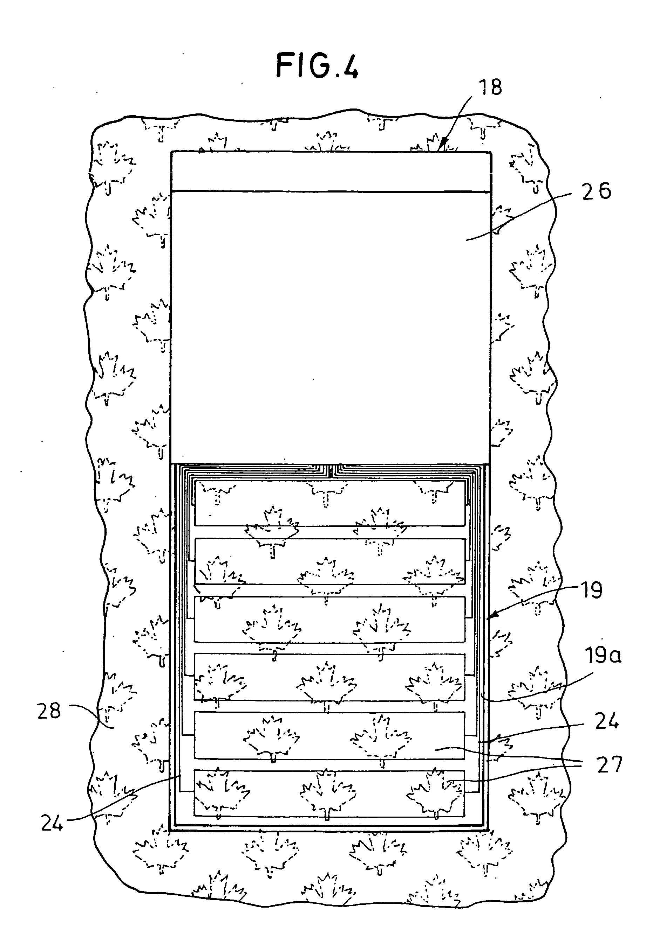

Wie aus Fig. 4 erkennbar ist, ist die Tastplatte 19 einschließlich der Tastorgane 27 durchsichtig, so daß die dahinter befindliche Tapete 28 sichtbar ist. Zwischen dieser Tapete und der Rückseite der Tastplatte 19 befindet sich jedoch ein Freiraum. Die Tastplatte 19 steht auslegerartig von dem Sockel 18 ab und scheint im Raum zu schweben.

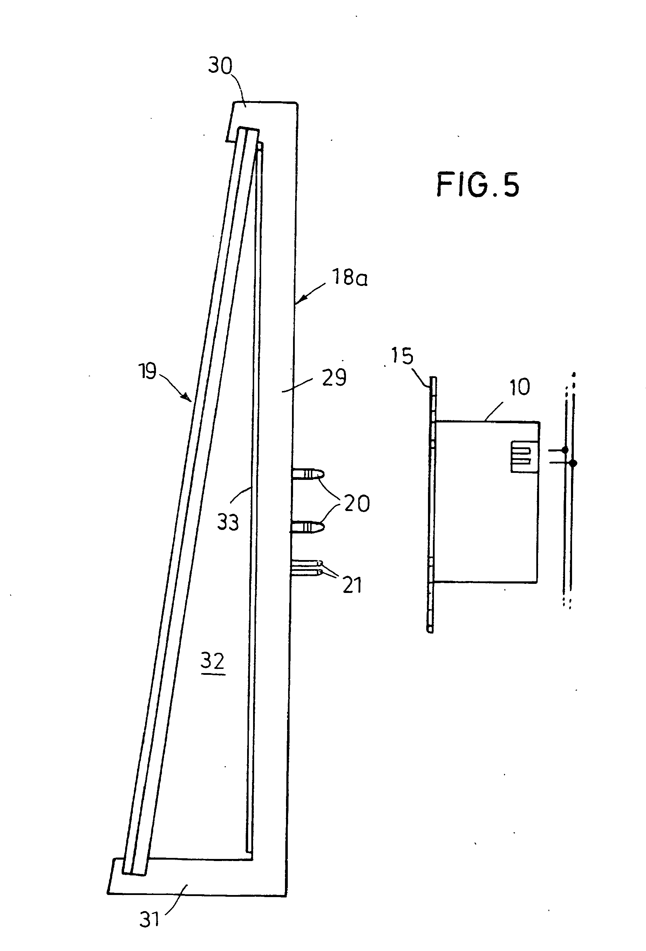

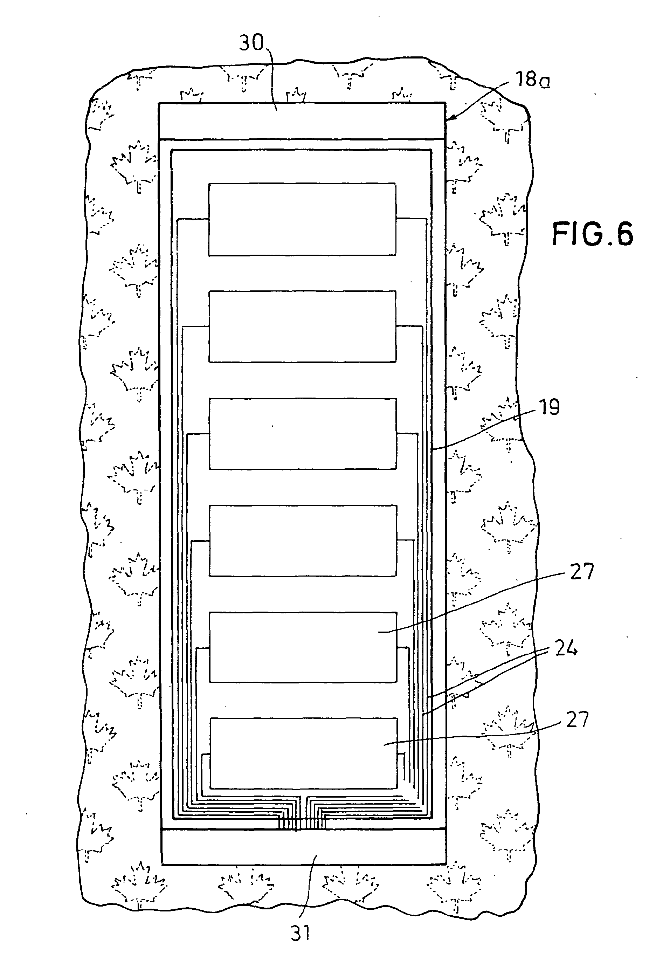

Bei dem Ausführungsbeispiel der Fign. 5 und 6 ist ein langgestreckter Sockel 18a vorgesehen, dessen vertikale Erstreckung wesentlich größer ist als diejenige der Tragplatte 15 des zugehörigen Installationsgehäuses 10. Der Sockel 18 weist also ein langgestrecktes flaches Sockelgehäuse 29 auf, von dem die mechanischen Halteelemente 20 und die elektrischen Kontakte 21 abstehen. An dem oberen Ende des Sockelgehäuses 29 verläuft eine horizontale Randleiste 30 und an dem unteren Ende verläuft eine horizontale Randleiste 31. Die Randleiste 31 steht weiter vor als die Randleiste 30, so daß die Tastplatte 19, deren oberer und unterer Rand in den Randleisten 30, 31 eingefaßt ist, eine pultartige Schrägstellung erhält. Auch hier befindet sich hinter der Tastplatte 19 ein Freiraum 32, der seitlich offen ist. Durch die durchsichtige Tastplatte 19 sieht man auf die Frontseite 33 des Sockels 29. Diese Frontseite kann als Dekorplatte ausgebildet sein.

Wie Fig. 6 zeigt, erstreckt sich der Bereich, in dem Schaltorgane 27 vorhanden sind, über die gesamte Fläche der Tastplatte 19.

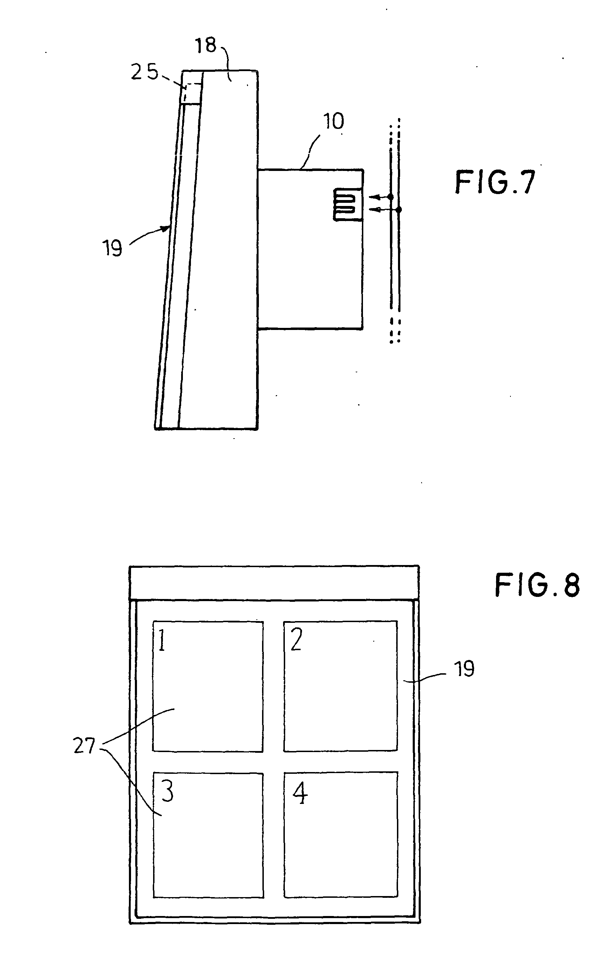

Die Fign. 7 und 8 zeigen ein Ausführungsbeispiel, bei dem der gleiche Sockel 18 vorgesehen ist wie in Fig. 1. Die Tastplatte 19 ist jedoch kürzer, so daß sie nicht über den Sockel 18 übersteht. Sie bedeckt nahezu die gesamte Vorderseite des Sockels und auf ihr sind mehrere Schaltorgane 7 ausgebildet.

Da die Schaltorgane in der durchsichtigen Tastplatte 19 nur Niederspannung schalten können, ist in dem Sockel 18 bzw. 18a eine elektronische Selektionsschaltung enthalten, die den jeweiligen Schaltzustand eines Schaltorgans erkennt und an die in dem Installationsgehäuse 10 enthaltene elektronische Auswerteschaltung meldet. Die Auswerteschaltung kann dann den Schaltzustand an eine Busleitung weiterleiten. Alternativ besteht die Möglichkeit, im Installationsgehäuse einen Leistungsschalter unterzubringen, der Netzspannung schalten kann, um auf diese Weise mit dem Installationsschalter unmittelbar einen Verbraucher zu schalten.

## Patentansprüche

1. Installationsschalter für die Gebäudeinstallation, mit einem in eine Installationsdose (11) einsetzbaren Installationsgehäuse (10) mit Tragplatte (15), einem dem Installationsgehäuse (10) abnehmbar vorgesetzten Sockel (18) und einer an dem Sockel (18) befestigten Tastplatte (19), die mindestens ein durch Druck betätigbares Schaltorgan (27) enthält, **dadurch gekennzeichnet, dass** die Tastplatte (19) aus einer durchsichtigen Scheibe besteht.

2. Installationsschalter nach Anspruch 1, **dadurch gekennzeichnet, daß** die Tastplatte (19) an dem Sockel (18) derart angebracht ist, daß unter ihr ein offener Freiraum (32) vorhanden ist.

3. Installationsschalter nach Anspruch 2, **dadurch gekennzeichnet, daß** die Tastplatte (19) nach Art eines Auslegers von dem Sockel (18) frei absteht.

4. Installationsschalter nach Anspruch 2, **dadurch gekennzeichnet, daß** die Tastplatte (19) an zwei Rändern an dem Sockel (18a) befestigt ist.

5. Installationsschalter nach einem der Ansprüche 1-4, **dadurch gekennzeichnet, daß** die Tastplatte (19) pultartig schräggestellt ist.

6. Installationsschalter nach einem der Ansprüche 1-5, **dadurch gekennzeichnet, daß** eine den Sockel (18) verdeckende Dekorplatte (26) auf der Scheibe befestigt ist.

7. Installationsschalter nach einem der Ansprüche 1-6, **dadurch gekennzeichnet, daß** das Installationsgehäuse (10) elektrische Kontakte (14) und die Tragplatte (15) mechanische Halterungen (16) jeweils für Kontakte (21) bzw. Halteelemente (20) des Sockels (18) aufweist.

8. Installationsschalter nach einem der Ansprüche 1-7, **dadurch gekennzeichnet, daß** der Sockel (18) eine elektrische Selektionsschaltung enthält, die aus den Tastsignalen Übertragungssignale für eine im Installationsgehäuse (10) enthaltene Schaltung erzeugt.

9. Installationsschalter nach einem der Ansprüche 1-8, **dadurch gekennzeichnet, daß** das Installationsgehäuse (10) einen Leistungsschalter enthält.

10. Installationsschalter nach einem der Ansprüche 1-9, **dadurch gekennzeichnet, daß** das Installationsgehäuse (10) einen Busankoppler enthält.

## Claims

1. An installation switch for building installation, comprising an installation housing (10) provided with a support plate (15) and adapted for insertion into an installation box (11), a base portion (18) detachably arranged in front of the installation housing (10), and a touch panel (19) attached to the base portion (18) and including at least one pressure-actuated switch element (27), wherein the touch panel (19) comprises a transparent plate.

2. The installation switch according to claim 1, **characterized in that** the touch panel (19) is attached to the base portion (18) in such a manner that an open free space (32) is provided under the touch panel.

3. The installation switch according to claim 2, **characterized in that** the touch panel (19) is arranged to freely project from the base portion (18) in a cantilevered manner.

4. The installation switch according to claim 2, **characterized in that** the touch panel (19) has two of its edges attached to the base portion (18a).

5. The installation switch according to any one of claims 1-4, **characterized in that** the touch panel (19) is inclined in the manner of a lectern.

6. The installation switch according to any one of claims 1-5, **characterized in that** a decorative plate (26) concealing the base portion (18) is attached to the plate.

7. The installation switch according to any one of claims 1-6, **characterized in that** the installation housing (10) comprises electric contacts (14) and the support plate (15) comprises mechanical holding supports (16), provided for contacts (21) and holding elements (20), respectively, of the base portion (18).

8. The installation switch according to any one of claims 1-7, **characterized in that** the base portion (18) includes an electric selection circuit for generating, from the sensor signals, transmission signals for a circuit included in the installation housing (10).

9. The installation switch according to any one of claims 1-8, **characterized in that** the installation housing (10) includes a power switch.

10. The installation switch according to any one of claims 1-9, **characterized in that** the installation housing (10) includes a bus coupling device.

## Revendications

1. Interrupteur d'installation pour l'installation de bâtiment, comportant un boîtier d'installation (10) avec plaque support (15) pouvant être logé dans une boîte d'installation (11), un socle avant (18) séparable du boîtier d'installation (10) et une plaque à touches (19) fixée sur le socle (18) contenant au moins un organe de commutation (27) actionnable par pression, **caractérisé en ce que** la plaque à touches (19) est un plateau transparent.

2. Interrupteur d'installation selon la revendication 1, **caractérisé en ce que** la plaque à touches (19) est montée sur le socle (18) de façon à ménager un espace libre (32) sous elle.

3. Interrupteur d'installation selon la revendication 2, **caractérisé en ce que** la plaque à touches (19) est librement éloignée du socle (18), à la manière d'un bras.

4. Interrupteur d'installation selon la revendication 2, **caractérisé en ce que** la plaque à touches (19) est fixée sur le socle (18a) par deux bords.

5. Interrupteur d'installation selon l'une quelconque des revendications 1 à 4, **caractérisé en ce que** la plaque à touches (19) est inclinée à la manière d'un pupitre.

6. Interrupteur d'installation selon l'une quelconque des revendications 1 à 5, **caractérisé en ce qu'**une plaque décorative (26) recouvrant le socle (18) est fixée sur le plateau.

7. Interrupteur d'installation selon l'une quelconque des revendications 1 à 6, **caractérisé en ce que** le boîtier d'installation (10) comporte des contacts électriques (14) et la plaque support (15) comporte des fixations mécaniques (16), respectivement pour des contacts (21) ou des éléments de maintien (20) du socle (18).

8. Interrupteur d'installation selon l'une quelconque des revendications 1 à 7, **caractérisé en ce que** le socle (18) contient un circuit de sélection électrique, qui à partir des signaux des touches génère des signaux de transmission pour un circuit contenu dans le boîtier d'installation (10).

9. Interrupteur d'installation selon l'une quelconque des revendications 1 à 8, **caractérisé en ce que** le boîtier d'installation (10) contient un sectionneur de puissance.

10. Interrupteur d'installation selon l'une quelconque des revendications 1 à 9, **caractérisé en ce que** le boîtier d'installation (10) contient un coupleur de bus.
